(19) **Europäisches Patentamt / European Patent Office / Office européen des brevets**

(11) **EP 1 359 767 B1**

(12) **EUROPEAN PATENT SPECIFICATION**

(45) Date of publication and mention
of the grant of the patent:
**18.04.2007 Bulletin 2007/16**

(51) Int Cl.:
**H04N 7/36** (2006.01)

(21) Application number: **03000208.3**

(22) Date of filing: **07.01.2003**

(54) **Method for coding moving picture**

Verfahren zur Bewegtbildcodierung

Méthode pour le codage d'image animée

(84) Designated Contracting States:
**ES FR HU IT**

(30) Priority: **03.05.2002 KR 2002024470**

(43) Date of publication of application:
**05.11.2003 Bulletin 2003/45**

(60) Divisional application:
**05021832.0 / 1 635 577**

(73) Proprietor: **LG ELECTRONICS INC.**
**Seoul 150-010 (KR)**

(72) Inventor: **Jeon, Byeong Moon**
**Gwangjin-ku,**
**Seoul (KR)**

(74) Representative: **Schorr, Frank Jürgen et al**
**Diehl & Partner,**
**Augustenstrasse 46**
**80333 München (DE)**

(56) References cited:
**EP-A- 0 863 674        EP-A- 0 898 427**
**EP-A- 1 148 732**

- **WORKING DRAFT NUMBER 2, REVISION 2 (WD-2) JOINT VIDEO TEAM (JVT) OF ISO/IEC MPEG (MPEG-4 PART 10 AVC) AND ITU-T VCEG (H.26L), GENEVA, JANUARY 29 - FEBRUARY 1, STATUS: APPROVED OUTPUT DOCUMENT JVT-B118R2, [Online] 15 March 2002 (2002-03-15), pages 1-106, XP002245569 Retrieved from the Internet: < URL:ftp://standards.pictel.com/video-site /0201_GEN> [retrieved on 2003-06-22]**

**Description**

**Field of the Invention**

The present invention relates to a moving picture coding system, and more particularly, to a moving picture coding method to enhance a coding efficiency using a long-term reference picture.

**Description of the Related Art**

It is desirable to detect a scene change in a sequence so as to compress and code a moving picture sequence optimally. This is because many video applications, such as in news, sports broadcasting, a close-up conversation like interview, and multipoint video conferencing, include repeating scene changes. Such a scene change can occur in an entire picture or in some area of the picture.

The digital image coding method may be changed whenever a scene change is detected. For example, since similarity is very low between a picture in which scene change occurs and a picture in a previous scene, a picture with scene change is coded by intra mode in which a picture is coded using prediction only from decoded samples within the same picture rather than by inter mode in which a picture is coded by motion compensation from previously-decoded reference pictures.

In more detail, a picture in which a scene change occurs in the entire picture, is an intra picture that is coded in intra mode on all blocks. Meanwhile, in case of a picture in which a scene change occurs at some area, all blocks within the areas in which scene changes occur are coded in intra mode. Since such intra mode generates more bits compared with inter mode, a sequence in which scene changes occur very frequently has a fatal problem in a low bit rate application.

Generally, when using a B picture in a moving picture coding system, the coding order is different from the displaying order.

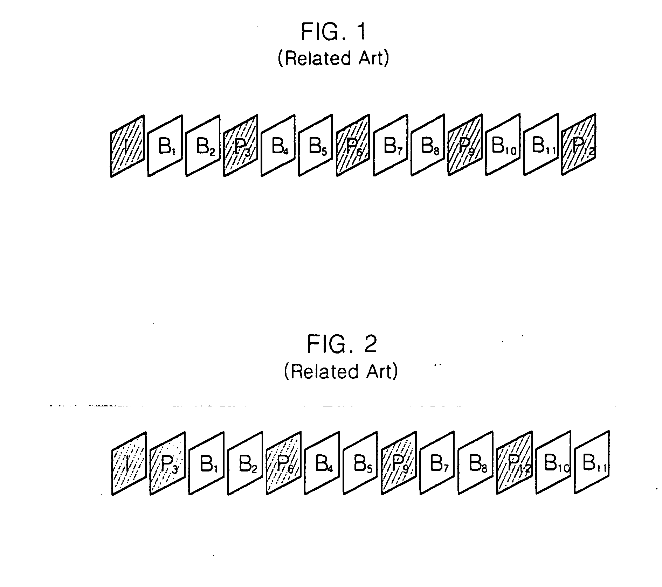

Fig. 1 illustrates a display order in which each picture is displayed when using two B pictures. As shown in Fig. 1, an intra picture I is displayed first among pictures to be displayed. Two B pictures B1 and B2 are displayed subsequently after the intra picture I. A P picture P3 is displayed after the B pictures are displayed. As described above, the next steps are performed. In other words, the fourth and fifth B pictures B4 and B5 are displayed after the P picture P3 is displayed. Subsequently, a P picture P6 is displayed.

However, the coding order of a digital image is not the same as the display order. In other words, the P picture is coded prior to the B picture.

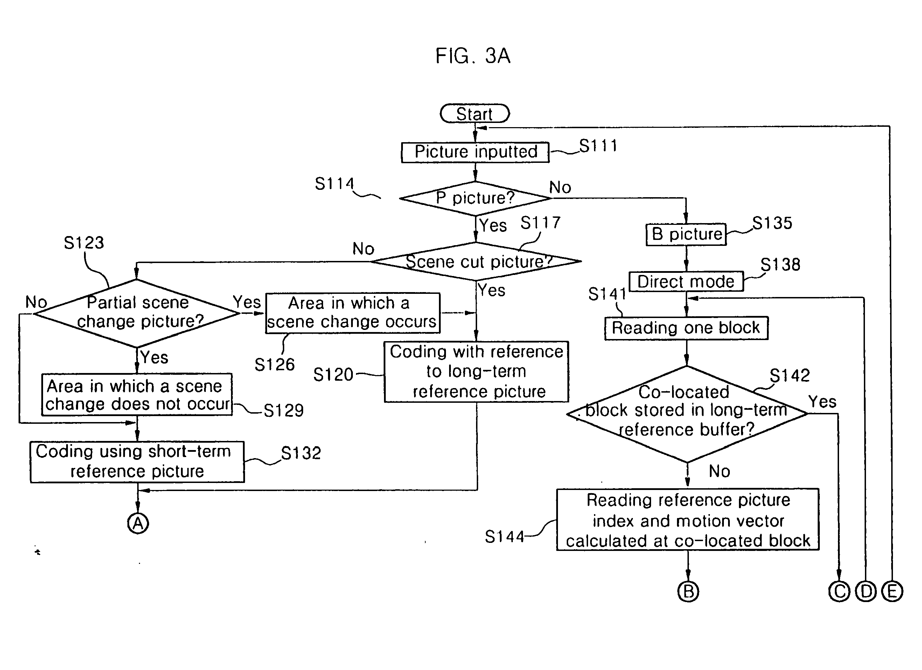

Fig. 2 illustrates a coding order in which each picture is displayed when using two B pictures. As shown in Fig. 2, if an intra picture I is coded, the P picture P3 is coded prior to the two B pictures B1 and B2 that are displayed prior to the P picture P3. After that, P6, B4, B5, P9, B7, B8, P12, B10 and B11 are coded subsequently.

Here, the B pictures have five modes such as intra mode, forward mode, backward mode, bi-predictive mode and direct mode. The bi-predictive mode has two reference pictures. Two reference pictures are all located prior to or after the B picture or one of them is located prior to the B picture and the other is located after the B picture.

Especially, the direct mode utilizes temporal redundancy to maintain motion continuity between two adjacent pictures. In other words, in the direct mode, the forward motion vector and the backward motion vector of the direct mode in the B picture are derived from the motion vector of a co-located block in the subsequent picture locating just after the B picture. Such a direct mode does not need overhead bits such as motion information so that a bit rate can be reduced.

Here, the forward motion vector $MV_f$ and the backward motion vector $MV_b$ of the conventional direct mode are obtained by scaling the motion vector MV using time distance between pictures when the co-located block in a subsequent picture has a motion vector MV. In other words, the forward motion vector $MV_f$ and the backward motion vector $MV_b$ are determined using the following Equations 1 and 2.

Equation 1:

$$MVf = \frac{TRb * MV}{TRd}$$

Equation 2:

$$MVb = \frac{(TRb - TRd) * MV}{TRd}$$

where MV is the motion vector of the co-located block in the subsequent picture, $MV_f$ is the forward motion vector of the direct mode for a B picture, $MV_b$ is the backward motion vector of the direct mode for the B picture, TRd is a time distance between the subsequent picture and a reference picture pointed by the motion vector of the co-located block in the subsequent picture, and TRb is a time distance between a B picture and a reference picture pointed by the motion vector of the co-located block in the subsequent picture.

AS a result, the direct mode is a coding mode to obtain two motion-compensated blocks using two motion vectors $MV_f$ and $MV_b$ and obtains a prediction block by averaging or interpolative calculation of two motion-compensated blocks.

This is disclosed in more detail in document "Joint Video Team (JVT) of ISO/IEC MPEG and ITU-T VCEG: Working Draft Number 2 Revision 2 of ITU-T Recommendation H.26L and MPEG-4/Part 10" that relates to a draft specification of a reference coding method to be used for the development of a new video compression method called JVT Coding as ITU-T Recommendation (H.26L) and ISO/IEC JTC1 Standard (MPEG-4, Part 10). The document discloses the features of the preamble of independent claim 1. In more detail, said document discloses to store both short-term pictures and long-term pictures in a multi-picture buffer. Furthermore, said document discloses to compute motion vectors in direct mode for each sub-block as scaled versions of a corresponding vector component of a co-located makroblock in a temporally subsequent picture. Said motion vectors are calculated differently only depending on whether a picture structure (PSTRUCT) and a reference are fields or frames. If a subsequent reference picture is an intra-coded frame or the reference macroblock is an intra-coded block, the motion vectors are set to zero.

EP 0 898 427 A1 discloses to generate a predicted picture candidate through Direct Prediction as it is defined in the encoding method H263 Recommendation ITU-T. Moreover, D2 discloses usage of a memory a to be a frame memory for storing a reference picture frame, a memory b that is a static sprite memory and a memory c that is a dynamic sprite memory.

## SUMMARY OF THE INVENTION

The present invention is directed to a moving picture coding method that substantially obviates one or more problems due to limitations and disadvantages of the related art.

Accordingly, an object of the present invention is to provide a moving picture coding method capable of enhancing coding efficiency by direct mode using a long-term reference picture for a B picture.

Another object of the present invention is to provide a moving picture coding method capable of reducing the amount of bits using inter mode for the picture in which a scene change occurs.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of determining motion vectors of direct mode in a B picture includes the step of: when coding each block in the B picture using the direct mode, determining differently motion vectors of the direct mode for the B picture according to a kind of a reference buffer storing a reference picture pointed by a motion vector of a co-located block in a specified picture.

It is desired that the specified picture is one of short-term reference pictures used in coding the B picture.

The kind of the reference picture is determined using a reference picture index calculated previously at a co-located block in the specified picture.

The reference picture index is stored in a system buffer.

When a motion vector calculated at co-located block in the specified picture points to a long-term reference picture, a forward motion vector of the direct mode for the B picture is a motion vector of the co-located block in the specified picture, and a backward motion vector of the direct mode for the B picture is determined to be zero.

The motion vector calculated at the co-located block in the specified picture is stored in a system buffer.

When a motion vector calculated at co-located block in the specified picture points to a short-term refer-

picture, motion vectors of the direct mode for the B picture are determined by scaling the motion vector of the co-located block in the specified picture by time distance between pictures.

The motion vector calculated at the co-located block in the specified picture is stored in a system buffer.

In another aspect of the present invention, a method of determining motion vectors of direct mode in a B picture comprises the step of: when coding each block in the B picture using the direct mode, determining differently motion vectors of the direct mode for the B picture according to a kind of a reference buffer storing a specified picture.

The reference buffer includes a long-term reference buffer and a short-term reference buffer.

It is desired that the specified picture is one of a short-term reference picture and a long-term reference picture.

When the specified picture is in the long-term reference buffer, a forward motion vector of the direct mode for the B picture is a motion vector of the co-located block in the specified picture, and a backward motion vector of the direct mode for the B picture is determined to be zero.

When the specified picture is in the short-term reference buffer, motion vectors of direct mode for the B picture are determined differently according to the kind of the reference buffer storing a reference picture pointed by the motion vector of the co-located block in the specified picture.

The kind of the reference picture is determined using a reference picture index calculated previously at the co-located block in the specified picture.

The reference picture index is stored in a system buffer.

When a motion vector calculated at the co-located block in the specified picture points to a long-term reference picture, a forward motion vector of the direct mode for the B picture is a motion vector of the co-located block in the specified picture, and a backward motion vector of the direct mode for the B picture is determined to be zero.

The motion vector calculated at the co-located block in the specified picture is stored in a system buffer.

When a motion vector calculated at co-located block in the specified picture points to a short-term reference picture, motion vectors of the direct mode for the B picture are determined by scaling the motion vector of the co-located block in the specified picture by time distance between pictures.

The motion vector calculated at the co-located block in the specified picture is stored in a system buffer.

In another aspect of the present invention, a method of coding a P picture of a moving picture in inter mode comprises the steps of: (a) determining whether a scene change occurs in the P picture; and (b) if a scene change occurs in the P picture, coding the P picture with reference to the long-term reference picture.

It is desired that the P picture in which a scene change occurs is one of a scene cut picture and a partial scene change picture.

If the P picture in which a scene change occurs is a partial scene change picture, the blocks included in an area in which a scene change occurs are coded using a long-term reference picture.

A long-term reference buffer storing the long-term reference picture is a buffer to store a picture coded before a predetermined time.

If the P picture in which a scene change occurs is a partial scene change picture, the blocks included in an area in which a scene change does not occur are coded using a short-term reference picture.

A short-term reference buffer storing the short-term reference picture is a buffer to store a picture coded after a predetermined time.

In another aspect of the present invention, a method of coding a moving picture sequence in a moving picture coding system comprises the steps of: (a) determining whether a scene change occurs in a P picture; (b) if there is a P picture in which a scene change occurs, coding the P picture in inter mode with reference to a long-term reference picture; (c) when coding each block in a B picture using direct mode according to coding order, determining a kind of a reference buffer storing a specified picture; and (d) calculating motion vectors of the direct mode for the B picture according to the kind of the reference buffer and coding the B picture in the direct mode.

The motion vector calculated at the co-located block in the specified picture is stored in a system buffer.

When the specified picture is in the long-term reference buffer in the step (d), a forward motion vector of the direct mode for the B picture is a motion vector of the co-located block in the specified picture, and a backward motion vector of the direct mode for the B picture is determined to be zero.

When the specified picture is in the short-term reference buffer in the step (d), motion vectors of direct mode for the B picture are determined differently according to the kind of the reference buffer storing a reference picture pointed by the motion vector of the co-located block in the specified picture.

The kind of the reference picture is determined using a reference picture index calculated previously at a co-located block in the specified picture.

The reference picture index is stored in a system buffer.

When a motion vector calculated at co-located block in the specified picture points to a long-term reference picture, a forward motion vector of the direct mode for the B picture is a motion vector of the co-located block in the specified picture, and a backward motion vector of the direct mode for the B picture is determined to be zero.

The motion vector calculated at the co-located block in the specified picture is stored in a system buffer.

When a motion vector calculated at co-located block in the specified picture points to a short-term reference picture, motion vectors of the direct mode for the B picture are determined by scaling the motion vector calculated at the co-located block in the specified picture by time distance between pictures.

The motion vector calculated at the co-located block in the specified picture is stored in a system buffer.

The P picture in which a scene change occurs is one of a scene cut picture and a partial scene change picture.

If the P picture in which a scene change occurs is a partial scene change picture, the blocks included in an area in which a scene change occurs are coded using a long-term reference picture.

A long-term reference buffer storing the long-term reference picture is a buffer to store a picture coded before a predetermined time.

If the P picture in which a scene change occurs is a partial scene change picture, the blocks included in an area in which a scene change does not occur are coded using a short-term reference picture.

A short-term reference buffer storing the short-term reference picture is a buffer to store a picture coded after a predetermined time.

A short-term reference buffer consists of a first input first output (FIFO).

The specified picture for direct mode coding in the B picture is one of reference pictures used in coding the B picture.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 illustrates a display order in which each picture is displayed when using two B pictures;

Fig. 2 illustrates a coding order in which each picture is displayed when using two B pictures;

Figs. 3A to 3B flowcharts illustrating a method of coding a moving picture sequence in a moving picture coding system according to the preferred embodiment of the present invention;

Fig. 4 illustrates a method of coding a moving picture sequence in which a scene change occurs according to the preferred embodiment of the present invention; and

Fig. 5 illustrates a method of coding a B picture in direct mode according to the preferred embodiment of the present invention.

## DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

To begin with, before an embodiment of the present invention is described, in moving pictures having a scene change, a picture in which a scene change occurs entirely in the picture is defined as a scene cut picture and a picture in which a scene change occurs partially in the picture is defined as a partial scene change picture.

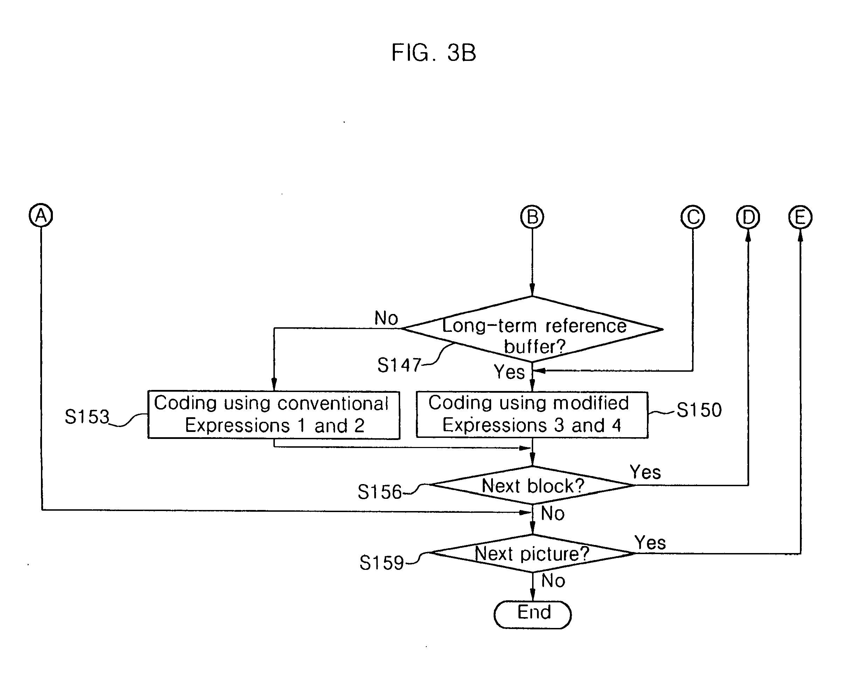

Figs. 3A and 3B are flowcharts illustrating a method of coding a moving picture sequence in a moving picture coding system according to the preferred embodiment of the present invention. Referring to Figs. 3A and 3B, pictures are sequentially inputted from a moving picture sequence (S111).

Kinds of pictures are determined (S114). In other words, it is determined whether the inputted picture is a P picture or a B picture. Here, in this embodiment of the present invention, it is assumed that a coding with respect to an intra picture is completed in advance.

If a picture is the P picture, it is determined whether or not a scene change occurs in the P picture (S117) Here, the scene change is determined by comparing the P picture with a picture (P picture or B picture) displayed just before the P picture.

As a result of the determination in the step S117, if the scene is changed entirely among the P pictures, the P picture is a scene cut picture. Meanwhile, if the P picture is determined as the scene cut picture, a coding is carried out with reference to a long-term reference picture (S120).

If the P picture is not the scene cut picture, it is determined whether or not the P picture is a partial scene change picture (S123).

If the P picture is the partial scene change picture, blocks contained in an area in which the scene is changed are coded with reference to the long-term reference picture returning to the step S120 (S126).

Blocks contained in an area in which the scene is not changed are coded with reference to a short-term reference picture (S129, S132).

Here, the long-term reference picture is a picture stored in a long-term reference buffer, and the short-term reference picture is a picture stored in a short-term reference buffer.

The short-term reference buffer is provided with a first input first output (FIFO) in which a picture first inputted is outputted first, and the pictures coded before relatively short time are stored in the short-term reference buffer.

The pictures coded before relatively long time are stored in the long-term reference buffer. First pictures of respective scene sets, i.e., an intra picture, the scene cut picture, the partial scene change picture and the like are stored in the long-term reference buffer.

If there is not the scene cut picture or the partial scene change picture in the long-term reference buffer, the picture in which the scene change occurs can be stored additionally.

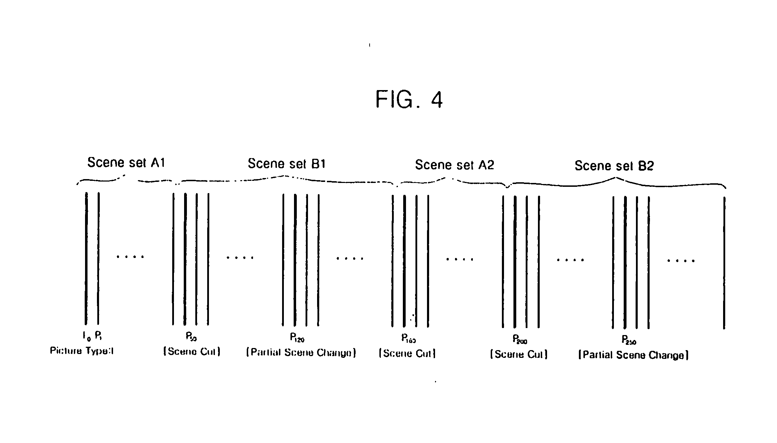

Accordingly, as shown in Fig. 4, an intra picture I0 that is first scene cut picture of a scene set A1, a first scene cut picture P50 of a scene set B1 and a first partial scene change picture P120 can be stored in the long-term reference buffer. Here, scene set is a set of similar pictures. For example, suppose a discussion program that an announcer appears, a panel A appears, the announcer appears again and the panel A appears again. The scene that the announcer appears first is scene set A, and the scene that the panel A appears subsequently is scene set B. The scene that the announcer appears again is scene set A, and the scene that the panel A appears again is scene set B. As described above, when a scene change occurs, the P picture is coded by inter mode to code with reference to a short-term reference or a long-term reference picture instead intra mode. This reduces the amount of the bits to enhance coding efficiency.

Description of the step S117 to S132 will be made with Fig. 4. As shown in Fig. 4, if the P picture P200 to be coded now is the scene cut picture belonging to the scene set B2, the short-term reference pictures stored in the short-term reference buffer are not used. It is because the scene cut picture P200 is the first picture of the scene set B2, and the scene set of the scene cut picture P200 is different from the short-term reference pictures such as P199, P198, P197, etc belonging to the scene set A2. So the similarity of the scene cut picture P200 and the short-term reference pictures belonging to the scene set A2 is greatly reduced and the precise coding cannot be achieved from such reference pictures.

In this case, the P picture is coded in inter mode with reference to the other reference pictures P50 and P120 belonging to a scene set B1 that is same as a scene set B2.

On the other hand, if the partial scene change occurs in the P picture P250, the coding is performed differently depending on two conditions. In other words, the blocks included in the area which a partial scene change occurs is coded in inter mode with reference to the long-term reference pictures P50 and P120 stored in the long-term reference buffer. The blocks included in the area which a partial scene change does not occur is coded in inter mode with reference to the short-term reference pictures P249, P248, P247, etc stored in the short-term reference buffer.

As described above, after one P picture is coded, the next picture is inputted (S159). If the corresponding picture is a B picture, the five prediction modes (intra mode, forward mode, backward mode, bi-predictive mode and direct mode) are tested and one of them is selected as an optimal coding mode (S135, S138). In this specification, direct mode will be described mainly.

First, one block of the B picture is read (S141). Of course, the other blocks can be read subsequently. After then, a kind of a reference buffer storing a specified picture is examined

The specified picture is determined of the earlier pictures than the B picture in the coding order regardless of the display order. In other words, the specified picture is one of the reference pictures used to code the B picture. Therefore, the specified picture can be a short-term reference picture or a long-term reference picture. The short-term reference pictures may be before or after the B picture in display order and they are stored in the short-term reference buffer. The long-term reference pictures are stored in the long-term reference buffer. If the specified picture is a long-term reference picture, the forward motion vector of direct mode for the B picture is a motion vector of the co-located block in the specified picture. The backward motion vector of direct mode for the B picture is determined to be zero (S150). However, if the specified picture is a short-term reference picture, the reference picture index and the motion vector calculated at the co-located block in the specified picture are read (S144). These reference picture index and the motion vector is calculated previously and stored in the system buffer. According to reference picture index, it is determined whether the motion vector of the co-located block in the specified picture points to a long-term reference picture (S147). As described above, the reference pictures are stored in the reference buffer which includes the short-term reference buffer and the long-term reference buffer.

If the motion vector of the co-located block in the specified picture points to the long-term reference picture, the B picture is coded using the following expressions 3 and 4 (S150).

## Expression 3

$$MVf = MV$$

where MV is a motion vector of the co-located block in the specified picture, and MVf is a forward motion vector of direct mode for the B picture

## Expression 4

$$MVb = 0$$

where MV is a motion vector of the co-located block in the specified picture, and MVb is a backward motion vector of direct mode for the B picture

In other words, if the motion vector of the co-located block in the specified picture points to the long-term reference picture, the forward motion vector of direct mode for the B picture is the motion vector of the co-located block in the specified picture and the backward motion vector is zero.

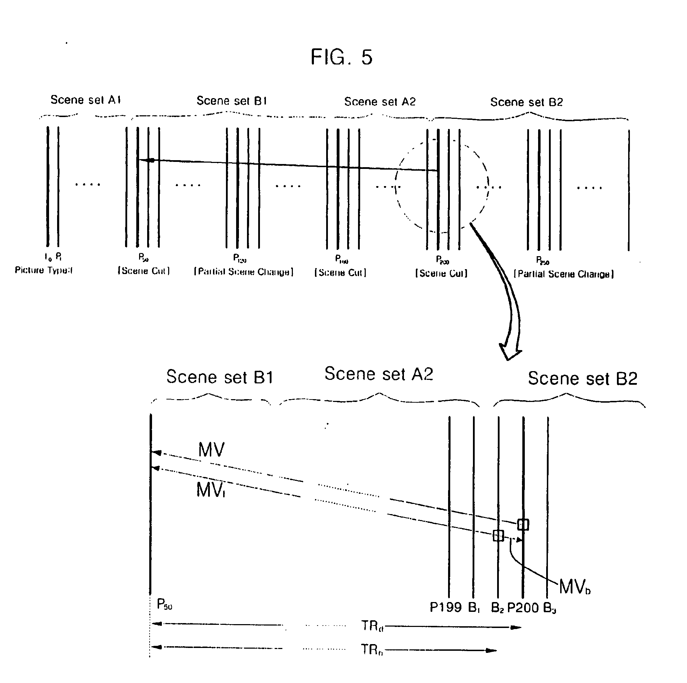

As shown in Fig. 5, in the step S150, if the motion vector of the co-located block in the specified picture P200 points to the long-term reference picture P50, TRd and TRb is meaningless in the conventional expressions 1 and 2. In other words, since TRd and TRb is the time distance including even the other scene set A2 between the specified picture P200 belonging to the scene set B2 and the long-term reference picture P50 belonging to the same scene set B1, the forward motion vector and the backward motion vector of direct mode cannot be calculated using such TRd and TRb.

Referring to Fig. 5, more detailed description is made. When inserting two B pictures into a moving picture sequence and coding them, the P picture P200 that is earlier than the B1 and B2 pictures in coding order is coded at first. Here since the P picture P200 is a scene cut picture in which a scene change occurs, the P picture P200 is coded in inter mode from the long-term reference picture P50 stored in the long-term reference buffer. According to the coding order, the next picture to be coded is a B1 picture. Since the B1 picture belongs to a scene set A2, the most blocks are coded in forward mode from the short-term reference pictures belonging to the scene set A2 or in bi-predictive mode in which all of two reference pictures belong to the scene set A2. However, intra mode, backward mode or bi-predictive mode from the P picture P200 belonging to the other scene set B2, and direct mode to obtain motion vectors of the direct mode from the co-located block in the P picture P200 are probably not used as the coding mode for the blocks in the B1 picture.

Differently, since not only the B2 picture but also the specified picture P200 used formotion vectors of direct mode for the B2 picture belong to the same scene set B2, the direct mode is selected as a coding mode for the most blocks in the B2 picture. In other words, after obtaining motion vector of each block in the specified picture P200 by inter mode from the long-term reference picture P50 belonging to the same scene set B2, the motion vectors of direct mode in the B2 picture are calculated from the motion vector of the co-located block in the specified picture P200. Since the B2 picture and the specified picture P200 belong to the scene set B2, the long-term reference picture P50 also belongs to the scene set B1, and the similarity between the scene set B1 and the scene set B2 is very high, the direct mode can be selected as a coding mode for the most blocks in the B2 picture. Accordingly, the coding efficiency for the B2 picture is improved.

On the other hand, if the motion vector of the co-located block in the specified picture points to a short-term reference picture, the B picture is coded using the conventional Expressions 1 and 2. In this time, since the short-term reference picture stored in the short-term reference buffer belongs to the same scene set as the B picture belongs to and other scene set does not exist between the specified picture and the short-term reference picture, the forward motion vector and the backward motion vector of direct mode are determined using the conventional Expressions 1 and 2 related to TRd and TRb representing time distance.

If one block of B picture is coded, the next block in the B picture is read and coded subsequently (S156). Such processes are performed on all blocks in the B picture. After the B picture is coded, the next picture is inputted and coded so that a moving picture coding is achieved (S159).

As described above, according to a moving picture coding method of the present invention, the forward motion vector and the backward motion vector of direct mode for the B picture are determined differently based on the reference picture pointed by the motion vector of the co-located block in the specified picture. When coding the B picture, direct mode is mainly used as coding mode to enhance the entire coding efficiency.

According to the moving picture coding method of the present invention, the P picture in which a scene change occurs is coded in inter mode using motion compensation from a long-term reference to reduce the amount of bits and enhance coding efficiency.

Summarized the present invention relates to a moving picture coding method to enhance a coding efficiency for a moving picture coding sequence by inter mode and direct mode in a B picture using a long-term reference picture. In the present invention, a P picture is coded in inter mode according to scene change. The motion vectors of direct mode are calculated and coded according to the kind of the reference picture pointed by a motion vector of a co-located block in the specified picture.

**Claims**

1.  A method of deriving motion vectors for a bi-predictive block in direct mode, the method comprising:

    reading (S141) a bi-predictive block to be processed and a co-located block providing a motion vector pointing to a reference picture; and
    deriving first and second motion vectors for the bi-predictive block considering a motion vector of the co-located block;
    **characterized in that**
    the method further comprises determining (S147) the kind of a reference picture pointed to by the motion vector of the co-located block, the kind of the reference picture including a long-term reference picture and a short-term reference picture; and
    in the step of deriving first and second motion vectors for the bi-predictive block the motion vectors for the bi-predictive block are derived differently (S150) in dependency on the determined kind of the reference picture; wherein the first motion vector for the bi-predictive block is determined equal to the motion vector of the co-located block and the second motion vector for the bi-predictive block is determined equal to zero, if the motion vector of the co-located block points to a long-term reference picture.

2.  The method according to claim 1, wherein the long-term reference picture is a reference picture coded before a predetermined temporal distance and the short-term reference picture is a reference picture coded after said predetermined temporal distance.

3.  The method according to one of claims 1 or 2, wherein if the motion vector of the co-located block points to a short-term reference picture, a first and a second motion vector for the bi-predictive block is derived by scaling the motion vector of the co-located block using a temporal distance of the reference picture.

4.  The method according to one of the claims 1 to 3, wherein the reference picture pointed to by the motion vector of the co-located block is stored in a reference buffer, the reference buffer storing a long-term reference picture or a short-term reference picture.

5.  The method according to claim 4, wherein the reference buffer includes a long-term reference buffer and a short-term reference buffer.

6.  The method according to claim 5, wherein a short-term reference buffer consists of a first input first output (FIFO).

7.  The method according to one of the claims 1 to 6, wherein the co-located block is included in a specified picture, wherein the specified picture is one of reference pictures processed previously to be used for processing the bi-predictive block that is included in a B picture.

8.  The method according to claim 7, wherein the specified picture is one of a short-term reference picture and a long-term reference picture.

9.  The method according to one of claims 7 or 8, wherein when the specified picture is stored in a long-term reference buffer, a forward motion vector of the direct mode for the B picture is a motion vector of the co-located block in the specified picture, and a backward motion vector of the direct mode for the B picture is determined to be zero.

10. The method according to one of claims 7 to 9, wherein when the specified picture is stored in a short-term reference buffer, motion vectors of direct mode for the B picture are determined differently according to the kind of the reference buffer storing a reference picture pointed by the motion vector of the co-located block in the specified picture.

11. The method according to one of the claims 1 to 10, wherein the first motion vector is a forward motion vector and the second motion vector is a backward motion vector.

12. The method according to one of the claims 1 to 11, wherein the method is performed for each block in a B picture using the direct mode.

13. The method according to one of claims 1 to 12, wherein the kind of the reference picture is determined using a reference picture index calculated previously at the co-located block in the reference picture respectively specified picture.

14. The method according to claim 13, wherein the reference picture index is stored in a system buffer.

15. The method according to one of the claims 1 to 14, wherein the motion vector of the co-located block is stored in a system buffer.

16. The method according to one of claims 1 to 15, wherein the reference picture referred to by the co-located block is used to derive the motion vectors for the bi-predictive block.


**Patentansprüche**

1. Verfahren zum Herleiten von Bewegungsvektoren eines Doppel-Vorhersage-Blocks (bi-predictive block) im Direkt-Modus, das Verfahren umfassend:

   Lesen (S141) eines zu verarbeitenden Doppel-Vorhersage-Blocks und eines entsprechend angeordneten (co-lokalisierten) Blocks, welcher einen Bewegungsvektor bereitstellt, der auf ein Referenzbild zeigt; und
   Herleiten von ersten und zweiten Bewegungsvektoren des Doppel-Vorhersage-Blocks unter Berücksichtigung eines Bewegungsvektors des entsprechend angeordneten Blocks;
   **dadurch gekennzeichnet, dass**
   das Verfahren weiter ein Bestimmen (S147) der Art des Referenzbildes, auf welches durch den Bewegungsvektor des entsprechend angeordneten Blocks gezeigt wird, umfasst, wobei die Art des Referenzbildes ein Langzeit-Referenzbild und ein Kurzzeit-Referenzbild umfasst; und
   in dem Schritt des Herleitens von ersten und zweiten Bewegungsvektoren des Doppel-Vorhersage-Blocks die Bewegungsvektoren für den Doppel-Vorhersage-Block in Abhängigkeit von der bestimmten Art des Referenzbildes unterschiedlich hergeleitet werden (S150);
   wobei der erste Bewegungsvektor des Doppel-Vorhersage-Blocks gleich dem Bewegungsvektor des entsprechend angeordneten Blocks bestimmt wird, und der zweite Bewegungsvektor des Doppel-Vorhersage-Blocks gleich Null bestimmt wird, wenn der Bewegungsvektor des entsprechend angeordneten Blocks auf ein Langzeit-Referenzbild zeigt.

2. Verfahren nach Anspruch 1, wobei das Langzeit-Referenzbild ein Referenzbild ist, was vor einem vorbestimmten zeitlichen Abstand kodiert wurde, und das Kurzzeit-Referenzbild ein Referenzbild ist, das nach dem vorbestimmten zeitlichen Abstand kodiert wurde.

3. Verfahren nach einem der Ansprüche 1 oder 2, wobei, wenn der Bewegungsvektor des entsprechend angeordneten Blocks auf ein Kurzzeit-Referenzbild zeigt, ein erster und zweiter Bewegungsvektor des Doppel-Vorhersage-Blocks durch Skalieren des Bewegungsvektors des entsprechend angeordneten Blocks unter Verwendung eines zeitlichen Abstands des Referenzbildes erhalten werden.

4. Verfahren nach einem der Ansprüche 1 bis 3, wobei das Referenzbild, auf welches durch den Bewegungsvektor des entsprechend angeordneten Blocks gezeigt wird, in einem Referenzpuffer gespeichert ist, wobei der Referenzpuffer ein Langzeit-Referenzbild oder ein Kurzzeit-Referenzbild speichert.

5. Verfahren nach Anspruch 4, wobei der Referenzpuffer einen Langzeit-Referenzpuffer und einen Kurzzeit-Referenzpuffer umfasst.

**6.** Verfahren nach Anspruch 5, wobei ein Kurzzeit-Referenzpuffer aus einem Zuerst-Eingang-Zuerst-Ausgang (first input first output, FIFO) besteht.

**7.** Verfahren nach einem der Ansprüche 1 bis 6, wobei der entsprechend angeordnete Block in einem spezifizierten Bild enthalten ist, wobei das spezifizierte Bild eines der Referenzbilder ist, die zuvor bearbeitet worden sind, um für die Verarbeitung des Doppel-Vorhersage-Blocks verwendet zu werden, welches in einem B-Bild enthalten ist.

**8.** Verfahren nach Anspruch 7, wobei das spezifizierte Bild entweder ein Kurzzeit-Referenzbild oder ein Langzeit-Referenzbild ist.

**9.** Verfahren nach einem der Ansprüche 7 oder 8, wobei wenn das spezifizierte Bild in einem Langzeit-Referenzpuffer gespeichert ist, ein Vorwärts-Bewegungsvektor des Direkt-Modus für das B-Bild ein Bewegungsvektor des entsprechend angeordneten Blocks in dem spezifizierten Bild ist, und ein Rückwärts-Bewegungsvektor des Direktmodus für das B-Bild zu Null bestimmt wird.

**10.** Verfahren nach einem der Ansprüche 7 bis 9, wobei, wenn das spezifizierte Bild in einem Kurzzeit-Referenzpuffer gespeichert ist, Bewegungsvektoren des Direkt-Modus für das B-Bild in Abhängigkeit von der Art des Referenzpuffers, der ein Referenzbild speichert, auf welches durch den Bewegungsvektor des entsprechend angeordneten Blocks in dem spezifizierten Bild gezeigt wird, unterschiedlich bestimmt werden.

**11.** Verfahren nach einem der Ansprüche 1 bis 10, wobei der erste Bewegungsvektor ein Vorwärts-Bewegungsvektor und der zweite Bewegungsvektor ein Rückwärts-Bewegungsvektor ist.

**12.** Verfahren nach einem der Ansprüche 1 bis 11, wobei das Verfahren für jeden Block in einem B-Bild unter Verwendung des Direktmodus durchgeführt wird.

**13.** Verfahren nach einem der Ansprüche 1 bis 12, wobei die Art des Referenzbildes unter Verwendung eines Referenzbild-Index bestimmt wird, welcher zuvor für den entsprechend angeordneten Block in dem Referenzbild bzw. spezifizierten Bild berechnet wird.

**14.** Verfahren nach Anspruch 13, wobei der Referenzbild-Index in einem Systempuffer gespeichert ist.

**15.** Verfahren nach einem der Ansprüche 1 bis 14, wobei der Bewegungsvektor des entsprechend angeordneten Blocks in einem Systempuffer gespeichert wird.

**16.** Verfahren nach einem der Ansprüche 1 bis 15, wobei das Referenzbild, auf welches durch den entsprechend angeordneten Block Bezug genommen wird, verwendet wird, um die Bewegungsvektoren des Doppel-Vorhersage-Blocks herzuleiten.

**Revendications**

**1.** Procédé de dérivation de vecteurs de mouvement pour un bloc biprédictif dans un mode direct, le procédé comprenant :

la lecture (S141) d'un bloc biprédictif à traiter et un bloc co-situé fournissant un vecteur de mouvement pointant vers une image de référence ; et
la dérivation des premier et second vecteurs de mouvement pour le bloc biprédictif considérant un vecteur de mouvement du bloc co-situé ;
**caractérisé en ce que**
le procédé comprend en outre la détermination (S147) du type d'une image de référence pointée par le vecteur de mouvement du bloc co-situé, le type d'image de référence comprenant une image de référence de long terme et une image de référence de court terme ; et
dans l'étape de dérivation des premier et second vecteurs de mouvement pour le bloc biprédictif, les vecteurs de mouvement pour le bloc biprédictif sont dérivés différemment (S150) en fonction du type déterminé de l'image de référence ;

dans lequel le premier vecteur de mouvement pour le bloc biprédictif est déterminé égal au vecteur de mouvement du bloc co-situé et le second vecteur de mouvement pour le bloc biprédictif est déterminé égal à zéro, si le vecteur de mouvement du bloc co-situé pointe vers une image de référence de long terme.

**2.** Procédé selon la revendication 1, dans lequel l'image de référence de long terme est une image de référence codée avant une distance temporelle prédéterminée et l'image de référence de court terme est une image de référence codée après ladite distance temporelle prédéterminée.

**3.** Procédé selon l'une des revendications 1 ou 2, dans lequel si le vecteur de mouvement du bloc co-situé pointe vers une image de référence de court terme, un premier et un second vecteur de mouvement pour le bloc biprédictif est dérivé en ajustant la taille du vecteur de mouvement du bloc co-situé en utilisant une distance temporelle de l'image de référence.

**4.** Procédé selon l'une quelconque des revendications 1 à 3, dans lequel l'image de référence pointée par le vecteur de mouvement du bloc co-situé est stockée dans un tampon de référence, le tampon de référence stockant une image de référence de long terme ou une image de référence de court terme.

**5.** Procédé selon la revendication 4, dans lequel le tampon de référence comprend un tampon de référence de long terme et un tampon de référence de court terme.

**6.** Procédé selon la revendication 5, dans lequel un tampon de référence de court terme se compose d'un registre premier entrée premier sortie (FIFO).

**7.** Procédé selon l'une des revendications 1 à 6, dans lequel le bloc co-situé est compris dans une image spécifiée, dans lequel l'image spécifiée est une des images de référence traitées précédemment à utiliser pour traiter le bloc biprédictif qui est compris dans une image B.

**8.** Procédé selon la revendication 7, dans lequel l'image spécifiée est celle d'une image de référence de court terme et d'une image de référence de long terme.

**9.** Procédé selon l'une des revendications 7 à 8, dans lequel lorsque l'image spécifiée est stockée dans un tampon de référence de long terme, un vecteur de mouvement vers l'avant du mode direct pour l'image B est un vecteur de mouvement du bloc co-situé dans l'image spécifiée, et un vecteur de mouvement vers l'arrière du mode direct pour l'image B est déterminé être zéro.

**10.** Procédé selon l'une des revendications 7 à 9, dans lequel lorsque l'image spécifiée est stockée dans un tampon de référence de court terme, des vecteurs de mouvement du mode direct pour l'image B sont déterminés différemment selon le type de tampon de référence stockant une image de référence pointée par le vecteur de mouvement du bloc co-situé dans l'image spécifiée.

**11.** Procédé selon l'une des revendications 1 à 10, dans lequel le premier vecteur de mouvement est un vecteur de mouvement vers l'avant et le second vecteur de mouvement est un vecteur de mouvement vers l'arrière.

**12.** Procédé selon l'une des revendications 1 à 11, dans lequel le procédé est réalisé pour chaque bloc dans une image B en utilisant le mode direct.

**13.** Procédé selon l'une quelconque des revendications 1 à 12, dans lequel le type d'image de référence est déterminé en utilisant un index d'image de référence calculé précédemment sur le bloc co-situé dans l'image de référence respectivement l'image spécifiée.

**14.** Procédé selon la revendication 13, dans lequel l'index d'image de référence est stocké dans un tampon de système.

**15.** Procédé selon l'une des revendications 1 à 14, dans lequel le vecteur de mouvement du bloc co-situé est stocké dans un tampon de système.

**16.** Procédé selon l'une des revendications 1 à 15, dans lequel l'image de référence désignée par le bloc co-situé est utilisé pour dériver les vecteurs de mouvement pour le bloc biprédictif.

## FIG. 1
### (Related Art)

## FIG. 2
### (Related Art)

## FIG. 3A

Start

Picture inputted — S111

S114 — P picture? — No

Yes — S117

No — Scene cut picture? — Yes

S123 — Partial scene change picture? — No / Yes

Area in which a scene change occurs — S126

Area in which a scene change does not occur — S129

Coding using short-term reference picture — S132

Coding with reference to long-term reference picture — S120

B picture — S135

Direct mode — S138

Reading one block — S141

Co-located block stored in long-term reference buffer? — S142 — Yes / No

Reading reference picture index and motion vector calculated at co-located block — S144

Ⓐ  Ⓑ  Ⓒ Ⓓ Ⓔ

FIG. 3B

EP 1 359 767 B1

EP 1 359 767 B1

# FIG. 4

Scene set A1    Scene set B1    Scene set A2    Scene set B2

$I_0$ $P_1$    $P_{30}$    $P_{120}$    $P_{160}$    $P_{200}$    $P_{250}$

Picture Type:I    [Scene Cut]    [Partial Scene Change]    [Scene Cut]    [Scene Cut]    [Partial Scene Change]

FIG. 5